Europäisches Patentamt

European Patent Office

Office européen des brevets

(11) Veröffentlichungsnummer: **0 383 981**
**A1**

## EUROPÄISCHE PATENTANMELDUNG

(21) Anmeldenummer: **89103171.8**

(22) Anmeldetag: **23.02.89**

(51) Int. Cl.5: **G06F 11/34**

(43) Veröffentlichungstag der Anmeldung:
**29.08.90 Patentblatt 90/35**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Eber, Gerhard, Dipl.-Ing. (FH)**
**Krünerstrasse 15**
**D-8000 München 70(DE)**
Erfinder: **Münzenmaier, Thomas, Dipl.-Ing.**
**(FH)**
**Ammerlandstrasse 26**
**D-8000 München 71(DE)**

(54) **Datenselektor.**

(57) Die Erfindung bezieht sich auf einen Datenselektor für die Datenaufzeichnung eines zu prüfenden Mikrorechnersystems (Prüfling). Mit einem solchen Datenselektor soll die Aufzeichnung großer Datenmengen in einfacher Weise durchführbar sein.

Die Erfindung sieht hierzu einen, Tabellen über die zu selektierenden Daten enthaltenden Selektorspeicher vor, der in einen Adreßspeicher und einen Fensterspeicher aufgeteilt ist und mit den Adreßleitungen des Prüflings verbunden ist, sowie ferner einen Bit-Komparator, mit dem die Datenbusse von Adreßspeicher und Fensterspeicher verglichen werden. Der Bit-Komparator gibt dann einem Pufferspeicher einen Schreib-Puls, wenn an einer Bitposition der beiden Speicher (Adreß- und Fensterspeicher) jeweils eine Eins gesetzt ist.

FIG 1

Adreß-Bus und Datenbus des Prüflings

EP 0 383 981 A1

Die Erfindung bezieht sich auf einen Datenselektor für die Datenaufzeichnung eines zu prüfenden Mikrorechnersystems (Prüfling).

Neue, schnellere und immer speicherintensivere Rechnerarchitekturen erfordern für die Testphase eines Mikrorechnersystems eine Möglichkeit, um große Datenmengen von Adreß- und Datenbus aufzeichnen (tracen) zu können. Dabei ist es notwendig, größere Speicherbereiche mit unterschiedlichen Adreßlagen im Speicher in Echtzeit aufzuzeichnen. Für die Aufzeichnung von wahlfreien Adressen und Daten eines schnellen, beispielsweise 16/32 Bit-rechnersystems stellen sich daher die Anforderungen einer schnellen Entscheidung über die Aufzeichnungsnotwendigkeit, einer schnellen Adreß- und Datenaufzeichnung, der Verarbeitung von größeren Datenmengen (Pufferfunktion) sowie eines großen Selektionsbereichs für die aufzuzeichnenden Daten.

Datentracer mit immensen Tracemöglichkeiten sind derzeit nicht vorhanden. Verfügbar sind lediglich Softwaretracer und - emulatoren, jedoch ohne größere, qualifizierte Datentracemöglichkeit sowie Hardwaretracer (Logikanalyzer) mit verschiedenen Triggerbedingungen, allerdings ebenfalls ohne qualifizierte, größere Datentracemöglichkeit.

Der Erfindung liegt die Aufgabe zugrunde, einen Datenselektor zu schaffen, der die eingangs genannten Anforderungen für die Aufzeichnung großer Datenmengen in einfacher Weise erfüllt.

Diese Aufgabe wird gemäß der Erfindung gelöst durch einen, Tabellen über die zu selektierenden Daten enthaltenden Selektorspeicher, der in einen Adreßspeicher und einen Fensterspeicher aufgeteilt und derart mit den Adreßleitungen des Prüflings verbunden ist, daß die unteren (niederwertigen) Adreßleitungen des Prüflings an den Adreßspeicher und die oberen (höherwertigen) an den Fensterspeicher belegt sind, sowie ferner durch einen Bit-Komparator, mit dem die Datenbusse von Adreßspeicher und Fensterspeicher, in denen bei Zugriff auf eine Adresse des Prüflings gleichzeitig zwei Zellen angesprochen werden, verglichen werden, der dann einem eingangsseitig mit dem Adreßbus und Datenbus des Prüflings und ausgangsseitig mit einem Rechner verbundenen Pufferspeicher einen Schreib-Puls gibt, wenn an einer Bitposition der beiden Speicher (Adreß- und Fensterspeicher) jeweils eine Eins gesetzt ist.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispieles näher erläutert.

Es zeigen:

Fig. 1 einen Datenselektor im Blockschaltbild und

Fig. 2 das Datenselektions-Prinzip.

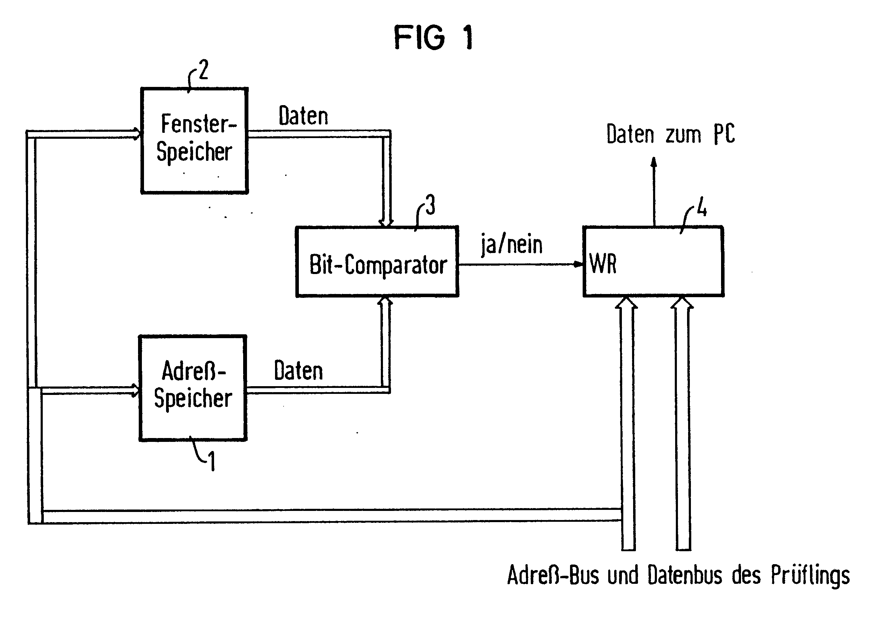

Der in Figur 1 gezeigte Datenselektor enthält einen Selektorspeicher, der seiner Funktion nach in einen Adreß-Speicher 1 und einen Fenster-Speicher 2 aufgeteilt ist. Im Selektorspeicher sind Tabellen abgelegt, über die die Aufzeichnungsentscheidung über die zu selektierenden Daten erfolgt. Der Selektorspeicher kann aus sämtlich verfügbaren Speicherbausteinen bestehen, beispielsweise RAM's, EPROM's, EEPROM's oder Flash-EPROM's, wobei das Selektionsprinzip immer gleich ist. Alle Adreßleitungen eines zu prüfenden Mikrorechnersystems (Prüfling) sind mit dem Selektorspeicher verbunden und zwar derart, daß die unteren (niederwertigen) Adreßleitungen des Prüflings an den Adreßspeicher 1 und die oberen (höherwertigen) an den Fensterspeicher 2 gelegt sind. Dabei ist auch eine Überlappung der Leitungen des Adreß- und Fensterspeichers an der Nahtstelle möglich.

Die Datenbusse des Adreßspeichers 1 und des Fensterspeichers 2 werden mit einem Bitkomparator 3 verglichen, der dann einen WR-Puls (Schreib-Puls) an einen Pufferspeicher 4 gibt, wenn an einer Bitposition der beiden Speicher 1, 2 jeweils eine Eins gesetzt ist. Der Pufferspeicher 4, der beispielsweise aus mehreren FIFO's (first in - first out-Speicherelementen) besteht, ist eingangsseitig mit dem Adreßbus und dem Datenbus des Prüflings verbunden, während ein ausgangsseitiges Bussystem zu einem Rechner, beispielsweise einem PC führt. Nach der Übernahme der Daten (Adressen und Daten) vom Prüfling in den Pufferspeicher 4 erfolgt bei Erhalt eines WR-Pulses die Übertragung zum Rechner, wo sie zur weiteren Verarbeitung zur Verfügung stehen.

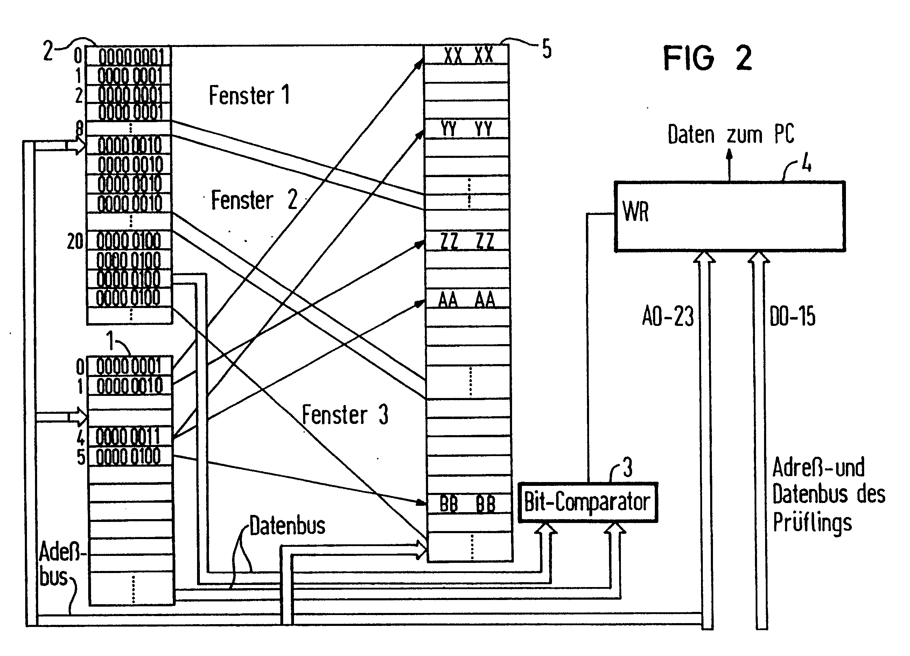

Das Datenselektions-Prinzip soll nachfolgend anhand von Figur 2 erläutert werden.

Der Schaltungsaufbau entspricht im wesentlichen dem nach Figur 1, wonach also die Adreßleitungen des Prüflings an den Adreßspeicher 1 und den Fensterspeicher 2 gelegt sind, deren Datenbus mit dem an den Pufferspeicher 4 angeschlossenen Bitkomperator 3 verglichen wird. Der Speicher im Prüfling, der an den Adreßbus angeschlossen ist, ist mit 5 bezeichnet. Adreßspeicher 1 und Fensterspeicher 2 bestehen im Ausführungsbeispiel aus 8Bit-Zellen.

Wird auf eine Adresse des Prüflings zugegriffen, werden gleichzeitig im Adreß- und Fensterspeicher zwei Zellen angesprochen. Sind nun an der gleichen Bitposition des Adreß- und Fensterspeichers Einsen gesetzt, werden Adresse und Daten des Prüflings in den Pufferspeicher 4 übernommen. Im Fensterspeicher 2, der in mehrere Fenster unterteilt ist (Fenster 1, 2, 3), darf je Zelle nur ein Bit gesetzt sein (vgl. die Darstellung in Figur 2), im Adreßspeicher 1 hingegen mehrere. Sind in einer Zelle des Adreßspeichers mehrere Bit's gesetzt, ist diese Adresse für mehrere Fenster gültig (max. für alle Fenster möglich). Dies ist in Figur 2 in der Weise dargestellt, daß von der Zelle 4 Verbindungslinien zu zwei Zellen (YY YY, AA AA) des Speichers 5 im Prüfling geführt sind. Die Zuordnung der Fenster zwischen Zellen des Fensterspeichers 2 und dem Speicher 5 im Prüfling ist durch Flächen für die Fenster 1, 2 und 3 wiedergegeben.

Überlappen sich die Adreßleitungen im Selektorspeicher, unterteilen sich die Fenster in Fensterbereiche. Die Anzahl der Fensterbereiche errechnet sich aus der Anzahl der überlappenden Adreßleitungen. Damit ist man bei der Adreßfestlegung der Fenster nicht mehr an die Schrittweite der Fenstergröße und die maximale Anzahl der möglichen Fenster (= Anzahl der setzbaren Bit's) gebunden. Für den Fall zweier Überlappungen (Beispiel: Adreßbus des Prüflings A0 - 23, Adreßspeicher hat die Leitungen A0 - 15 und der Fensterspeicher die Leitungen A14 - 23) ergeben sich vier Fensterbereiche je Fenster mit einem Adreßbereich, der gleich einem Viertel der Fenstergröße ist. Die Bereiche eines Fensters müssen im Fensterspeicher nicht aufeinander folgen.

Eine Reduktion der Adresse und damit eine Reduktion der aufzuzeichnenden Daten wird dadurch erreicht, daß nur die Adressen, die an den Adreßspeicher geführt sind, in den Pufferspeicher übernommen werden, während die Fensternummer als binärcodierte Zahl in den Pufferspeicher übertragen wird.

Bezugszeichneliste

1 - Adreßspeicher
2 - Fensterspeicher
3 - Bit-Komparator
4 - Pufferspeicher
5 - Speicher im Prüfling

**Ansprüche**

1. Datenselektor für die Datenaufzeichnung eines zu prüfenden Mikrorechnersystems (Prüfling), **gekennzeichnet durch** einen, Tabellen über die zu selektierenden Daten enthaltenden Selektorspeicher, der in einen Adreßspeicher und einen Fensterspeicher aufgeteilt und derart mit den Adreßleitungen des Prüflings verbunden ist, daß die unteren (niederwertigen) Adreßleitungen des Prüflings an den Adreßspeicher und die oberen (höherwertigen) an den Fensterspeicher gelegt sind, sowie ferner durch einen Bit - Komparator, mit dem die Datenbusse von Adreßspeicher und Fensterspeicher, in denen bei Zugriff auf eine Adresse des Prüflings gleichzeitig zwei Zellen angesprochen werden, verglichen werden, der dann einem eingangsseitig mit dem Adreßbus und Datenbus des Prüflings und ausgangsseitig mit einem Rechner verbundenen Pufferspeicher einen Schreib-Puls gibt, wenn an einer Bitposition der beiden Speicher (Adreß- und Fensterspeicher) jeweils eine Eins gesetzt ist.

2. Datenselektor nach Anspruch 1, **dadurch gekennzeichnet,** daß im Fensterspeicher je Zelle lediglich ein Bit, im Adreßspeicher gegebenenfalls auch mehrere Bit's gesetzt sind.

3. Datenselektor nach Anspruch 2, **dadurch gekennzeichnet,** daß bei mehreren in einer Zelle des Adreßspeichers gesetzten Bit's diese Adresse für mehrere Fenster gültig ist.

4. Datenselektor nach einem der Ansprüche 1 bis 3, **dadurch gekennzeichnet,** daß bei Überlappung der Adreßleitungen im Selektorspeicher sich die Fenster in Fensterbereiche unterteilen, deren Anzahl sich aus 2 Exponent (Anzahl der überlappenden Adreßleitungen) ergibt.

5. Datenselektor nach einem der Ansprüche 1 bis 4, **dadurch gekennzeichnet,** daß zur Reduktion der Adresse lediglich die Adressen, die an den Adreßspeicher geführt sind, in den Pufferspeicher übernommen werden und die Fensternummer als binärcodierte Zahl in den Pufferspeicher übertragen wird.

# FIG 1

FIG 2

**Fenster 1**

**Fenster 2**

**Fenster 3**

Adreß-bus

Datenbus

Daten zum PC

WR

A0-23    D0-15

Bit-Comparator

Adreß- und
Datenbus des
Prüflings

EP 0 383 981 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 651 298 (CURRIER, Jr.) <br> * Zusammenfassung; Spalte 1, Zeile 65 - Spalte 2, Zeile 45; Spalte 4, Zeile 25 - Spalte 5, Zeile 41 * <br> --- | 1 | G 06 F 11/34 |
| A | EP-A-0 136 168 (TANDEM) <br> * Insgesamt * <br> --- | 1 | |
| A | ELEKTRONIK, Nr. 8, 22. April 1983, Seiten 91-94, München, DE; H. PHILIPP: "Datenreduktion und -selektion in der Praxis" <br> * Seite 93, Spalte 1, Zeile 16 - Seite 94, Spalte 1, Zeile 7; Figur 4 * <br> --- | 1 | |
| A | DE-A-2 948 644 (BOSCH) <br> ----- | | |

RECHERCHIERTE SACHGEBIETE (Int. Cl.5)

G 06 F

Der vorliegende Recherchenbericht wurde für alle Patentansprüche erstellt

| Recherchenort | Abschlußdatum der Recherche | Prüfer |
|---|---|---|
| DEN HAAG | 09-10-1989 | HERREMAN,G.L.O. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
…………………………………………………………
& : Mitglied der gleichen Patentfamilie, übereinstimmendes
    Dokument